# EUROPEAN PATENT SPECIFICATION

(11) **EP 0 868 276 B1**
(45) Date of publication and mention of the grant of the patent: **22.03.2000**
(21) Application number: 96932127.2
(22) Date of filing: 24.09.1996
(51) Int. Cl.: B29C 45/02

(54) **INJECTION MOULDING MACHINE WITH A CHARGING CYLINDER**
SPRITZGIESSVORRICHTUNG MIT LADEZYLINDER
PRESSE D'INJECTION A CYLINDRE CHARGEUR

(30) Priority: 29.09.1995 SE 9503362
(43) Date of publication of application: 07.10.1998
(73) Proprietor: Svenska Norol Plastmaskiner AB, 263 57 Höganäs (SE)
(72) Inventor: NORESSON, Nils, Gunnar, S-252 84 Helsingborg (SE)
(74) Representative: Ström, Tore
(86) International application number: SE9601191
(87) International publication number: WO9711829

(56) References cited:
- WO-A-95/11122
- GB-A- 2 101 034
- GB-A- 2 260 101
- SCHAAB, HERBERT and KRAEMER, ALBERT, "Kunststoffmaschinenfuehrer", 1979, CARL HANSER VERLAG, pages 266-268.

## Description

The invention relates to a method in injection moulding wherein the plastic material is being screw plasticized and piston injected and wherein the plasticized plastic material is supplied through a non-return valve to the piston injection cylinder during the return of the injection piston and the plasticizing screw is rotated continuously in a fixed axial position in the plasticizing cylinder.

The invention also relates to a device in an injection moulding machine comprising a screw plasticizing cylinder and a piston injection cylinder connected to the outlet of the screw plasticizing cylinder via non-return valve.

During the injection of the plastic material into the moulding tool and also during the period required in order that the plastic material injected into the moulding tool shall set the plasticizing screw in most prior art injection moulding machines must either be stationary or be continuously to rotating while moving axially backwards in the plasticizing cylinder. In both cases a pulsating material flow and varying propulsing force on the plastic material will be obtained, which causes variations in the viscosity of the plastic material with following variations in the quality of the injection moulded product. If the plasticizing screw is made axially displaceable in the plasticizing cylinder a complicated machine construction is required as far as the drive mechanism of the plasticizing screw is concerned. If the plasticizing cylinder is provided with a degassing aperture the communication through said aperture moreover will be disturbed by the plasticizing screw when moving axially in the plasticizing cylinder because the decompression zone of the screw will be displaced in relation to the degassing aperture during the axial movement of the screw.

However, WO 95/11122 describes an injection moulding machine having two piston injection cylinders operating alternatingly so that when injection into the moulding tool takes place from one piston injection cylinder plasticized plastic material is supplied from the plasticizing cylinder to the other piston injection cylinder the piston therein being pressed backwards and plasticized plastic material being accumulated in said other piston injection cylinder for the following injection operation effected by said other piston injection cylinder. In this case it is thus not necessary that the screw in the plasticizing cylinder is axially displaceable; it can rotate continuously but a construction of this kind requires a very accurate control of the valve alternating between the two piston injection cylinders because each of these cylinders must be connected to the plasticizing cylinder for exactly the period required in order that the amount of plastic to be injected into the moulding tool during an injection operation shall be supplied to the piston injection cylinder so that injection of too much or to little material into the moulding tool is avoided.

The purpose of the invention is to overcome these drawbacks and to provide a method of the kind referred to above wherein the plasticizing screw can be rotated continuously in a fixed axial position in the plastizing cylinder without the necessity of having double piston injection cylinders or precision controlled valving between the piston injection cylinder and the plasticizing cylinder.

For this purpose the method as defined in claim 1 and the device as defined in claim 3 are proposed according to the invention.

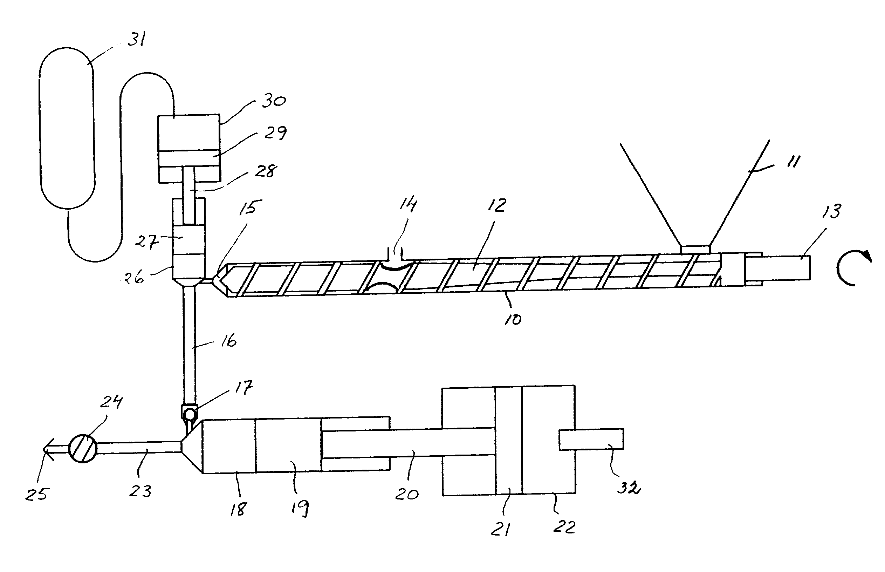

In order to closer explain the invention an embodiment thereof will be described in more detail below reference being made to the accompanying drawing disclosing diagrammatically an injection moulding machine for working the method according to the invention.

The injection moulding machine shown diagrammatically in the drawing comprises a plasticizing cylinder 10 having a material hopper 11 for supply of granulated plastic and having a plasticizing screw 12 rotatably mounted in the cylinder. This plasticizing screw is mounted for rotation in a fixed axial position; thus, it is not axially displacable in the plasticizing cylinder 10 as in some conventional injection moulding machines. A drive mechanism not shown in detail herein is connected to the drive spindle 13 of the plasticizing screw. Preferably the drive mechanism is an electric drive mechanism allowing stepless adjustment of the rotational speed of the plasticizing screw and stiffing, stepwise or continuously, between two or more rotational speeds at desired time, for example in order to change between a higher and a lower rotational speed, e.g. 90 rpm and 70 rpm. An electric drive mechanism offers a considerably higher efficiency and is much smaller and cheaper than the hydraulic drive mechanism provided in conventional injection moulding machines.

The plasticizing cylinder 10 has a degassing aperture 14 and at the outlet end 15 of said cylinder is directly connected to an outlet conduit 16. The conventional valve ring provided in injection moulding machines is not to be found in the outlet end 15 in this case. In the outlet conduit 16 there is provided instead a non-return valve 17 wherein the valve element preferably comprises a ball sealing against a seat. Such a non-return valve 17 provides a much more distinct opening and closing than the conventional valve ring and moreover is not weared to the same extent as the valve ring. The non-return valve 17 opens for flow in the outlet conduit 16, which is directed from the outlet end 15 of the plasticizing cylinder 10, and closes for flow in the opposite direction.

The outlet conduit 16 is connected via the non-return valve 17 to an injection cylinder 18 having an injection piston 19. The piston 19 is connected by means of a piston rod 20 with an operating piston 21 in a operating cylinder 22. The injecting cylinder 18 is connected by an outlet conduit 23 having an hydraulically controlled nozzle valve 24 with an injection nozzle 25 which can be connected to a moulding tool not shown.

A charging cylinder 26 having a piston 27 is also connected directly to the outlet 15 of the plasticizing cylinder 10 to the piston 27 being connected by means of a piston rod 28 with a piston 29 in a cylinder 30. This cylinder is connected to a counter pressure accumulator 31 which is charged by means of pressurized liquid from the hydraulic system of the injection moulding machine to a pressure of a desired value which means that this pressure acts on the piston 29. The cylinder 26 is in direct connection not only with the outlet 15 of the plasticizing cylinder 10 but also with the outlet conduit 16.

When the injection moulding machine described is operating applying the method according to the invention granulated plastic is supplied to the plasticizing cylinder 10 from the hopper 11. The plasticizing screw 12 is rotated at 13 at said higher rotational speed the granulated plastic material being transferred into plasticized condition during successive feeding through the plasticizing cylinder 10 by means of the plasticizing screw 12. On the plasticizing cylinder there shall be provided in a conventional manner heating elements for facilitating plasticizing. Gases and air entrained into the plastic material can escape through the degassing aperture 14. Supply of filler, lubricant etc can take place through the degassing aperture in the same manner as in an extruder because the plasticizing screw has no axial movement. The plasticized plastic material, the plastic mass, is forced from outlet 15 into the outlet conduit 16 and therethrough via the non-return valve 17 into the injection cylinder 18 the nozzle valve 24 being closed such that the piston 19 under the pressure of the plastic mass supplied will be forced backwards in the injection cylinder 18 to the right as seen in the drawing and carries the operating piston 21 with it in the movement thereof. The amount of plastic mass to be forced into the cylinder is of course dependent of how much plastic mass which is required in order to fill the moulding tool at each so called shot, i.e. at an operating stroke of the injection piston 19, to the left as seen in the drawing, and this amount can be accurately controlled by means of an abutment 32 for the operating piston 21, which can be adjusted axially.

When the required amount of plastic mass has been received by the injection cylinder 18 the nozzle valve 24 will be opened and the operating piston 21 will be put under pressure by means of pressurized liquid in the cylinder 22 in order that the injection piston 19 shall perform the operating stroke thereof during displacement to the left so that the plastic mass will be injected into the moulding tool via the injection conduit 23, the nozzle valve 24 and the injection nozzle 25 the non-return valve 17 keeping the connection between the injection cylinder 18 and the plasticizing cylinder 10 and the charging cylinder 26, respectively, via the outlet conduit 16 closed. When the injection cylinder 18 has received a required amount of plastic mass the piston engaging the abutment 32, and during the following injection step with connecting cooling step the plasticizing screw 12 is kept operating but is now allowed to rotate with said lower rotational speed. Since the plasticizing screw is in a fixed axial position it cannot screw itself backwards in the plasticizing cylinder but now transports the plastic mass from the outlet 15 into the charging cylinder 26 the piston 27 in this cylinder being pressed backwards against the pressure acting on the piston 29 in the cylinder 20 said pressure being determined by the pressure in the counter pressure accumulator 31. The plasticizing screw 12 thus rotates continuously during the operating cycle of the injection moulding machine against a stabilized counter pressure.

When the injection cylinder 18 is to be filled again with plastic mass the pressure on the piston 21 is relieved and the rotational speed of the plasticizing screw 12 is increased to the higher speed, plastic mass being supplied to the injection cylinder 18 from the charging cylinder 26 the piston 27 moving downwards under the pressure in the cylinder 30 and the counter pressure accumulator 31, respectively, as the plastic mass is expelled from cylinder 26, and also directly from the plasticizing cylinder 10. The non-return valve 17 allows the plastic mass to pass into the injection cylinder 18 the piston 19 being forced backwards therein, until a predetermined amount is present in the cylinder 18, which is determined by the adjustment of the abutment 32. Since the amount of plastic mass for each shot can be accurately adjusted in a mechanical way the possibility of too much material being injected into the moulding tool is eliminated. Then, the injection cycle described above starts again under repeated storing of plastic mass in the cylinder 26 by means of the continuously rotating plasticizing screw 12.

The pressure exerted on the plastic mass in the charging cylinder 26 should be slightly lower than the pressure maintained in the outlet 15 by means of the plasticizing screw 12 during the injection when the non-return valve 17 is closed, and these two pressures are of course considerably lower than the injection pressure in the injection cylinder 18.

The conduits 16 and 23 can be formed completely or partly by passages in a block which also forms the valve housing for the non-return valve 17 and the nozzle valve 24. The charging cylinder 26 with the piston 27 can be replaced by a space receiving the plastic mass and having a membrane which is pressurized.

In addition to the drawbacks mentioned above in injection moulding machines with a plasticizing screw operating intermittently or being axially displaceable so that it can be screwed backwards during the injection step being overcome by the invention this also provides essential advantages in other respects. Thus, a lower plasticizing temperature can be applied because the plasticizing is going on continuously, and a smaller screw dimension can be used in relation to the volume of plastic mass because a longer period is available to the screw for homogenizing the amount of plastic material required for a shot. Thus, the plasticizing screw has not to be dimensioned in view of the volume of the shot. A small screw provides a more effective homogenization of the plastic material. When the injection shall start the plastic mass is under pressure so that a faster filling of the mould can be obtained. A faster injection procedure is also obtained by the fact that there is no conventional valve ring in the plasticizing cylinder. As a consequence thereof the drawbacks existing at large volumes due to instability of the valve ring are not present. At high speed operation i.e. when minimum cooling time is applied, or in injection moulding of goods having thick walls the major part of the injection cycle related to final packing of the injected plastic mass the major part of the plastic material for the next shot is already plasticized when the moulding tool is opened. Since the plasticizing screw performs no axial movement there are unlimited possibilities as to the design of the screw for homogenization of different material compositions.

## Claims

1. Method in injection moulding wherein the plastic material is being screw plasticized and piston injected and wherein the plasticized plastic material is supplied through a non-return valve to the piston injection cylinder (18) during the return of the injection piston (19) and the plasticizing screw is rotated continuously in a fixed axial position in the plasticizing cylinder (10),
**characterized** in that the plasticized plastic material is being stored temporarily in a pressurized space (26) through a direct connection between the plasticizing cylinder and said space to be stored temporarily therein during the operating stroke of the injection piston in order to be supplied through said non-return valve to the injection cylinder together with plasticized plastic material supplied directly from the plasticizing screw through said non-return valve to the injection cylinder.

2. The method of claim 1, **characterized** in that the plasticizing screw (12) is rotated at a reduced rotational speed during the operating stroke of the injection piston (19).

3. A device in an injection moulding machine comprising a screw plasticizing cylinder (10) and a piston injection cylinder (18) connected to the outlet of the screw plasticizing cylinder via a non-return valve (17), **characterized** in that a pressurized space (26) is connected directly to the outlet (15) of the plasticizing cylinder in order to receive under pressure plasticized plastic material from the plasticizing screw (12) during the operating stroke of the injection piston (19) and to transfer the received pressurized plastic material via the non-return valve (17) to the piston injection cylinder (18) during the return of the injection piston.

4. The device of claim 3, **characterized** in that said pressurized space (26) comprises a cylinder having a pressurized piston (27).

5. The device of claim 4, **characterized** in that the piston (27) is directly or indirectly activated by the pressure in a counter pressure accumulator (31).

6. The device of any of claims 3 to 5, **characterized** in that the non-return valve (17) comprises a ball valve.

## Patentansprüche

1. Verfahren zum Spritzgießen, bei dem das Kunststoffmaterial mittels einer Schraube weichgemacht wird und mittels eines Kolbens eingespritzt wird, und bei dem das weichgemachte Kunststoffmaterial über ein Rückschlagventil dem Kolbeneinspritzzylinder (18) während des Rückwärtshubes des Einspritzkolbens (19) zugeführt wird, wobei die Weichmacherschraube kontinuierlich in einer festen Axialposition im Weichmacherzylinder (10) gedreht wird,
**dadurch gekennzeichnet,** daß das weichgemachte Kunststoffmaterial vorübergehend in einem Druckraum (26) gespeichert wird durch eine direkte Verbindung zwischen dem Weichmacherzylinder und dem Raum, um darin vorübergehend während des Arbeitshubes des Einspritzkolbens gespeichert zu werden, um durch das Rückschlagventil zum Einspritzzylinder zusammen mit dem weichgemachten Kunststoffmaterial zugeführt zu werden, das direkt von der Weichmacherschraube durch das Rückschlagventil in den Einspritzzylinder gefördert wird.

2. Verfahren nach Anspruch 1,
**dadurch gekennzeichnet,** daß die Weichmacherschraube (12) während des Arbeitshubes des Einspritzkolbens (19) mit verminderter Drehzahl gedreht wird.

3. Vorrichtung in einer Spritzgußmaschine, mit einem Schraubenweichmacherzylinder (10) und einem Kolbeneinspritzzylinder (18), der mit dem Auslaß des Schraubenweichmacherzylinders über ein Rückschlagventil (17) verbunden ist,
**dadurch gekennzeichnet,** daß ein Druckraum (26) direkt mit dem Auslaß (15) des Weichmacherzylinders verbunden ist, um das unter Druck stehende weichgemachte Kunststoffmaterial von der Weichmacherschraube (12) während des Arbeitshubes des Einspritzkolbens (19) aufzunehmen und das aufgenommene und unter Druck gesetzte Kunststoffmaterial während des Rückwärtshubes des Einspritzkolbens über das Rückschlagventil (17) zum Kolbeneinspritzzylinder (18) zu befördern.

4. Vorrichtung nach Anspruch 3,
**dadurch gekennzeichnet,** daß der Druckraum (26) einen Zylinder mit einem Druckkolben (27) umfaßt.

5. Vorrichtung nach Anspruch 4,
**dadurch gekennzeichnet,** daß der Kolben (27) direkt oder indirekt durch den Druck in einem Gegendruckakkumulator (31) betätigt wird.

6. Vorrichtung nach irgendeinem der Ansprüche 3 bis 5,
**dadurch gekennzeichnet,** daß das Rückschlagventil (17) ein Kugelventil umfaßt.

## Revendications

1. Procédé de moulage par injection, dans lequel la matière plastique est plastifiée à l'aide d'une vis et injectée à l'aide d'un piston et dans lequel la matière plastique plastifiée est amenée à travers un clapet anti-retour vers le cylindre d'injection par piston (18) lors du retour du piston d'injection (19) et la vis de plastification tourne en continu dans une position axiale déterminée dans le cylindre de plastification (10),
caractérisé en ce que la matière plastique plastifiée est stockée provisoirement dans un espace pressurisé (26) au moyen d'une liaison directe entre le cylindre de plastification et ledit espace afin d'être stockée provisoirement à l'intérieur de celui-ci lors de la course en fonctionnement du piston d'injection afin d'être amenée à travers ledit clapet anti-retour vers le cylindre d'injection conjointement avec la matière plastique plastifiée amenée directement depuis la vis de plastification par ledit clapet anti-retour vers le cylindre d'injection.

2. Procédé selon la revendication 1, caractérisé en ce que la vis de plastification (12) tourne à vitesse réduite lors de la course en fonctionnement du piston d'injection (19).

3. Dispositif placé dans une presse d'injection comprenant un cylindre de plastification à vis (10) et un cylindre d'injection par piston (18) relié à l'orifice de sortie du cylindre de plastification à vis au moyen d'un clapet anti-retour (17), caractérisé en ce qu'un espace pressurisé (26) est relié directement à l'orifice de sortie (15) du cylindre de plastification afin de recevoir sous pression la matière plastique plastifiée depuis la vis de plastification (12) lors de la course en fonctionnement du piston d'injection (19) et pour transférer la matière plastique sous pression reçue, au moyen du clapet anti-retour (17), vers le cylindre d'injection par piston (18) pendant le retour du piston d'injection.

4. Dispositif selon la revendication 3, caractérisé en ce que ledit espace pressurisé (26) comprend un cylindre ayant un piston sous pression (27).

5. Dispositif selon la revendication 4, caractérisé en ce que le piston (27) est actionné directement ou indirectement par la pression dans un accumulateur de contre-pression (31).

6. Dispositif selon l'une quelconque des revendications 3 à 5, caractérisé en ce que le clapet anti-retour (17) comprend un clapet à bille.
